Europäisches Patentamt

European Patent Office

Office européen des brevets

(19)

(11) Veröffentlichungsnummer: **0 345 377**

**A1**

(12) # EUROPÄISCHE PATENTANMELDUNG

(21) Anmeldenummer: **88109211.8**

(22) Anmeldetag: **09.06.88**

(51) Int. Cl.4: **G01L 5/24**

(43) Veröffentlichungstag der Anmeldung:
**13.12.89 Patentblatt 89/50**

(84) Benannte Vertragsstaaten:
**AT BE CH DE ES FR GB GR IT LI LU NL SE**

(71) Anmelder: **KALIBER MÜSZER-ES MERESTECHNIKA VALLALAT**
**Rozsafa u.11/17**
**Budapest, XIII.(HU)**

Anmelder: **A4GM Gépipari Kutato-Fejlesztö Leányvállalat**
**Budafoki ut 70**
**H-1117 Budapest(HU)**

(72) Erfinder: **Wagner, András, Dipl.-Ing.**
**Villányi u. 80**
**H-1118 Budapest(HU)**
Erfinder: **Toldy, János, Dipl.-Ing.**
**Röppentyü Köz 1**
**H-1139 Budapest(HU)**
Erfinder: **Ballon, István, Dipl.-Ing.**
**Gyakorl ú u. 34**
**H-1106 Budapest(HU)**

(74) Vertreter: **Patentanwälte Viering & Jentschura**
**Steinsdorfstrasse 6**
**D-8000 München 22(DE)**

(54) **Verfahren und Vorrichtung zum kontinuierlichen Kontrollieren und Überprüfen des Anziehens und des Betriebszustandes von Schraubenverbindungen.**

(57) Verfahren und Vorrichtung zum kontinuierlichen Kontrollieren und Überprüfen des Anziehens und des Betriebszustandes von Schraubenverbindungen. Das erfindungsgemäße Verfahren kann dadurch gekennzeichnet werden, daß die in der Schraube (1) entstehende Kraft auf eine flache Unterlage (2) übertragen wird und an der äußeren und/oder inneren, zu der Schraubenachse konzentrischen Mantelfläche der Unterlage (2) mindestens an einer Stelle die Deformation mit einem Dehnungsmeßwiderstand (3) gemessen wird, wonach der gemessene Wert tensiometrisch in ein elektrisches Signal umgewandelt und angezeigt wird. Die Vorrichtung enthält die zu kontrollierende bzw. zu prüfende Schraube (1), die dazugehörende Mutter (6) sowie den zu befestigenden Gegenstand bzw. eine Abstandshülse (13), wobei erfindungsgemäß eine auf die Schraube (1) aufgesetzte flache Unterlage (2) vorgesehen ist, auf deren zu der Schraubenachse konzentrischen inneren und/oder äußeren Mantelfläche wenigstens ein (tensiometrischer) Dehnungsmeßstreifen (3) angeordnet ist.

Fig 4

## Verfahren und Vorrichtung zum kontinuierlichen Kontrollieren und Überprüfen des Anziehens und des Betriebszustandes von Schraubenverbindungen.

Die Erfindung betrifft ein Verfahren zum kontinuierlichen Kontrollieren von Schraubenverbindungen während des Anziehens und des Betriebs bzw. zur Überprüfung derselben. Das Krafmeßgerät zum Kontrollieren der Schraubenverbindungen bildet ebenfalls den Gegenstand der Erfindung.

Wie es wohlbekannt ist, hat man früher ausschließlich das Anziehdrehmoment als Maß für das Anziehen von Schraubenverbindung zugrundeliegt. Dies führt jedoch zu Ungenauigkeiten, da bei gleichen Soll-Werten- infolge der einander entgegengesetzt wirkenden Erscheinungen - die angezeigten Werte sogar um 400% voneinander verschieden sein konnten. Aufgrund des erwähnten Prinzips konnte weder das Anziehen der Schraubenverbindungen noch der Zustand der Schraubenverbindungen genau bestimmt werden; technische Forderungen konnten ebenfalls nicht befriedigt werden. So wird z.B. bei der Dimensionierung von Dichtungen primär der dem gegebenen Dichtungsmaterial entsprechende optimale Flächendruck bestimmt, woraus sich die optimale Kraft eindeutig ergibt. Demnach wird das zu dieser Kraft erforderliche Anziehdrehmoment bestimmt, das - wie bereits erwähnt - jedoch nicht immer die optimale Preßkraft ergibt. Wenn nun die zum Zusammenpressen erforderliche Kraft kleiner ist, entsteht eine Undichtigkeit; wenn hingegen der vorbestimmte Wert überschritten wird, wird die Dichtung zerstört.

Neuerdings versucht man die Lebensdauer von Schraubenverbindungen dadurch zu verlängern, daß die Schraube mechanisch oder thermisch gestreckt wird, wonach man die Mutter mit einem niedrigen Drehmoment anzieht und dann die Streckung rückgängig macht, wodurch die Schraubenverbindung die geplante Preßkraft ausübt. Die tatsächliche Preßkraft wird dann durch die Messung der Dehnung der Schraube bestimmt. Obzwar diese Methode wesentlich genauer ist als die vorhererwähnte Lösung, wird hierbei die zeitliche Änderung der mechanischen Eigenschaften der Schraube überhaupt nicht berücksichtigt. Desweiteren wird die Messung immer einem Zustand gleicher Temperatur zugeordnet und kann weder während des Betriebs noch während des Anziehens kontinuierlich durchgeführt werden. So besteht z.B die Gefahr des Überdehnens der Schraube.

Bisher steht somit kein Verfahren zur Verfügung mit dessen Hilfe das Anziehen bzw. der Zustand der Schraubenverbindung während des Betriebs kontinuierlich kontrolliert bzw. geprüft werden können.

Dementsprechend wurde der Erfindung das Ziel gesetzt, ein Verfahren und einen zur Durchführung des Verfahrens geeigneten Kraftmesser zum kontinuierlichen Kontrollieren des Anziehens von Schraubenverbindungen bzw. Überprüfens des Betriebszustandes von Schraubenverbindungen zu schaffen und so zu gestelten, daß die tatsächlich erforderliche Preßkraft beim Anziehen der Schraubenverbindung eingestellt bzw. die Preßkraft kontinuierlich kontrolliert und der Zustand der Schraube und der Schraubenverbindung ständig überprüft werden können.

Erfindungsgemäß wird die gestellte Aufgabe so gelöst, daß die in der Schraube entstehende Kraft auf eine flache Unterlage übertragen wird, wobei an der äußeren und/oder inneren, zu der Schraubenachse konzentrischen Mantelfläche der Unterlage wenigstens an einer Stelle die Deformation der Unterlage mit einem Dehnungsmeßwiderstand abgefühlt wird und der abgefühlte Wert tensiometrisch in ein elektrisches Signal umgewandelt und angezeigt wird.

Erfindungsgemäß verfährt man vorzugsweise so, daß die Deformation an dem Mantel der flachen Unterlage an mehreren Stellen gemessen wird; aus den Meßergebnissen wird ein Mittelwert gebildet und der Mittelwert wird angezeigt.

Desweiteren betrifft die Erfindung einen Kraftmesser, der mit der zu kontrollierenden Schraube selbst, einer zu der Schraube gehörenden Mutter und dem zu befestigenden Gegenstand zusammenwirkt.

Die wesentliche Charakteristik der Erfindung zeigt sich darin, daß eine um die Schraube gelegte flache Unterlage vorgesehen ist, auf deren zu der Schraubenachse konzentrischen inneren und/oder äußeren Mantelfläche mindestens ein Dehnungsmeßstreifen angeordnet ist. Vorzugsweise sind in der flachen Unterlage vertikale und/oder horizontale spannungskonzentrierende Stellen hervorrufende, zu der Achse der Unterlage parallele Bohrungen oder Öffnungen ausgesteltet.

Unter Anwendung der erfindungsgemäßen Lösung kann z.B. eine Kraft der Größenordnung von 50 kN mit einem Fehler von ± 5 % gemessen werden. Die Überlastbarkeit der Meßzelle selbst beträgt 150 %, die Bruchelbelastung 300 %. Im Hinblick darauf, daß im Sinne der Erfindung keine obere Meßgrenze festgelegt ist, können auch die bei Atomreaktoren üblichen Schrauben M 140 kontrolliert bzw. überprüft werden.

Durch die erfindungsgemäße Lösung können die Schraubenverbindungen vorschriftsmäßig und schnell angezogen werden, gleichzeitig ist die Gefahr des Überdehnens der Schrauben infolge der kontinuierlichen Kontrolle ausgeschlossen. In dieser Weise kann die Lebensdauer der Schraubenverbindung weitgehend verlängert werden.

Im Sinne der Erfindung besteht die Möglichkeit, sogar einen Prüfstand zum Prüfen von Schrauben auszugestalten oder eine Prüfbank an einer impulsbetriebenen Maschine zum Anziehen der Schraubenmutter zu erstellen.

Die Erfindung wird anhand einiger vorteilhafter Ausführungsbeispiele mit Hilfe der Zeichnung näher erläutert. Es zeigen:

Figur 1 die Draufsicht einer bei dem erfindungsgemäßen Verfahren bzw. für den Kraftmesser verwendeten, mit Dehnungsmeßstreifen versehenen Unterlage,

Figur 2 die Seitenansicht der Unterlage nach Figur 1, teilweise im Schnitt dargestellt,

Figur 3 den Schnitt einer Konstruktion zum Anpressen eines Behälterdeckels als Anwendungsmöglichkeit,

Figur 4 den Schnitt einer Prüfbank an einer impulsbetriebenen Maschine zum Anziehen der Schraubenmutter, und

Figur 5 den Prüfstand zum Prüfen der Schrauben, im Schnitt dargestellt.

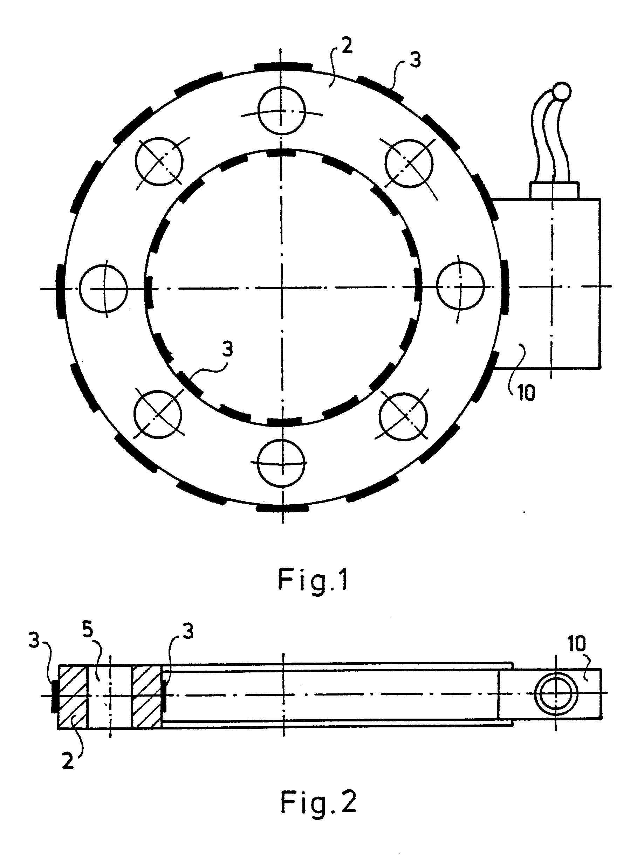

Eine in Figur 1 und 2 dargestellte flache Unterlage 2 bildet die eigentliche wesentliche Charakteristik der Erfindung, die - wie später erläuter wird - um die zu kontrollierende bzw. zu prüfende Schraube gelegt wird. Die Unterlage 2 besteht aus einer kreiszylindrischen Ringscheibe, an deren äußeren bzw. inneren Mantelfläche in entsprechender Teilung Dehnungsmeßstreifen 3 angeordnet sind, die eigentlich Dehnungsmeßwiderstände sind. Die Dehnungsmeßstreifen 3, die auch unter dem Namen "tensiometischer Streifen" bekannt sind, sind elektrisch über einen Anschluß 10 ausgeleitet und sind vorzugsweise gepaart, zu acht in Reihe in eine Wheatstonebrücke geschaltet. Vorzugsweise sind in der Unterlage 2 parallele Bohrungen 5 ausgestaltet, um auf der Unterlage spannungskonzentrierende Stellen in der Längs- und Querrichtung hervorzurufen.

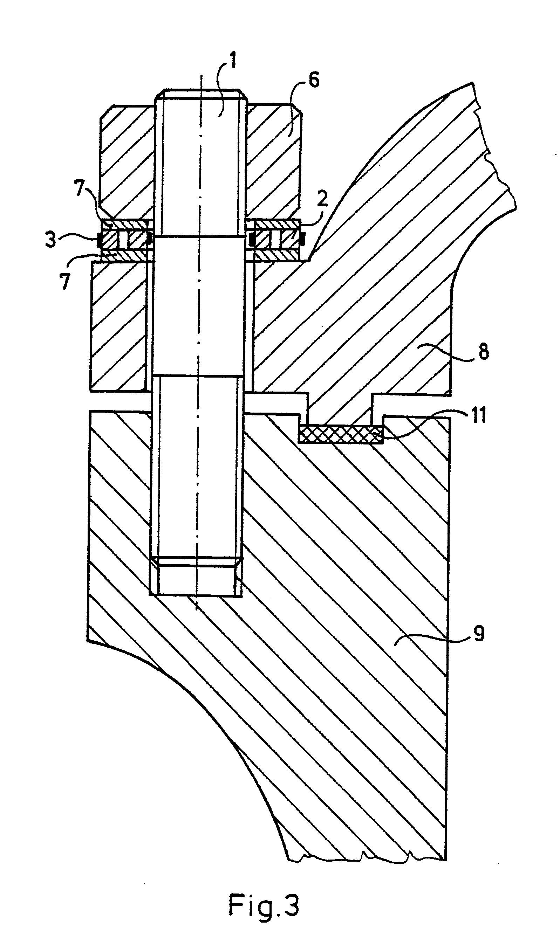

Figur 3 veranschaulicht eine mögliche Anwendung der Erfindung in der Praxis; hier ist es beabsichtigt, die Schraube 1 - die den abgedichteten Verschluß eines Deckels 8 eines Behälters 9 sichert - zu überprüfen. Der anzupressende Deckel 8 liegt unter Zwischenschaltung einer Abdichtung 11 auf dem Flansch des Behälters 9 auf. Die Schraube 1 ist in den Flansch des Behälters 9 eingeschraubt und ist durch den Flansch des Deckels 8 hindurchgeführt. Um die Schraube ist über dem Flansch des Deckels 8 eine Unterlegscheibe 7 aufgelegt, auf der die die Eigenart der Erfindung bildende, mit den Dehnungsmeßstreifen 3 versehene Unterlage 2 aufliegt. Nun folgt eine weitere Unterlegscheibe 7, auf der dann eine auf die Schraube 1 aufgeschraubte Mutter 6 abgestützt ist.

Aus diesem Ausführungsbeispiel ist es ersichtlich, daß die von den Dehnungsmeßstreifen 3 der Unterlage 2 ankommenden Informationen sowohl beim Anziehen der Schraubenverbindung, als auch während des Betriebs des Behälters zum Kontrollieren des jeweiligen Zustands und der Betriebsfähigkeit der Schrauben verwendet werden können.

So kann z.B., wenn es sich um Turbinen handelt, unter Anwendung der Erfindung gewährleistet werden, daß die Turbinen mit der maximal zulässigen Geschwindigkeit angelassen werden, da auf diese Weise die Geschwindigkeit lediglich durch die in den Schrauben entstehenden Spannungen beschränkt ist.

Durch die Erfindung kann weiterhin erreicht werden, daß die Dichtung mit einer Kraft, die dem Zustand der optimalen Abdichtung entspricht, zusammengepreßt wird.

Die kontinuierliche Meßbarkeit des Spannungszustandes der Schraubenverbindung bietet die Möglichkeit zur genauen Berechnung der Ermüdung der Schrauben in kleinen Zyklen, wodurch die Lebensdauer der Schrauben bestimmt werden kann.

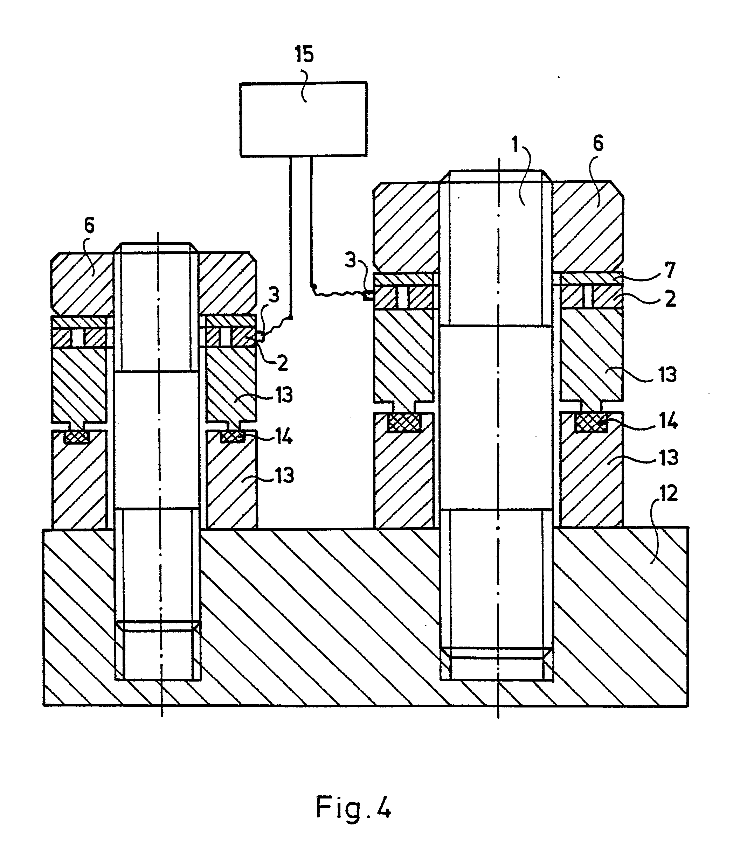

Figur 4 veranschaulicht eine im Sinne der Erfindung ausgestaltete Prüfbank, die zum Kontrollieren der Funktion von impulsbetriebenen, zum Anziehen von Schrauben dienenden Maschinen verwendet werden kann. Im wesentlichen besteht die Prüfbank aus in eine Grundplatte 12 von hoher Masse einschraubbaren Schrauben verschiedener Größe, wobei mit Abstandshülsen 13 die tatsächlichen Abmessungen des abzupressenden Flansches und mit Dichtungen 14 die tatsächliche Dynamik der Konstruktion simuliert werden können. Weitere Bestandteile der Prüfbank sind die bereits geschilderten Flachen Unterlagen 2 mit den daran angeordneten Dehnungsmeßstreifen 3. Über den Unterlagen sind die Unterlegscheiben 7 rings der einzelnen Schrauben aufgelegt; die anzuziehenden Muttern 6 stützen sich auf den Unterlegscheiben 7 ab. Die Dehnungsmeßstreifen 3 der Unterlagen 2 sind elektrisch an ein Anzeigegerät 15 angeschlossen.

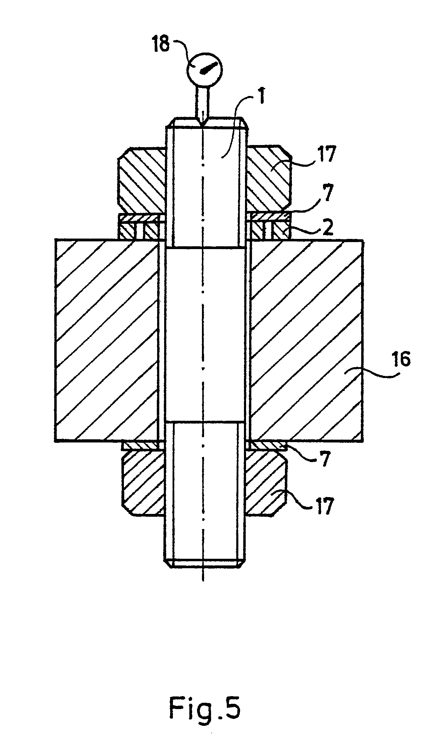

Unter Anwendung der Erfindung kann auch ein Prüfstand zur schnellen zerstörungsfreien Kontrolle der tatsächlichen Festigkeit von Schrauben ausgestaltet werden. Wie es aus Figur 5 ersichtlich ist, besteht der Prüfstand im wesentlichen aus die zu prüfende Schraube 1 aufnehmenden Abstandsblökken 16, unter denen die Schrauben unter Zwischenschaltung der Unterlegscheiben 7 mit einer Gegenmutter 16 eingespannt sind, während die Unterlage 2 auf die Schraube von oben her aufgesetzt wird. Über der Unterlage 2 liegt eine weitere Unterlegscheibe 7, auf der die zum Anziehen der

Schraube dienende Mutter 17 aufliegt.

Über der Schraube, vorteilhaft in deren Achse, ist ein zum Messen bzw. zum Kontrollieren der Dehnung der Schraube dienender Mikrometer 18 angeordnet. Während des auf dem Prüfstand mit Moment vorgenommenen Anziehens sind die Dehnung der Schraube 1 und die dazugehörende preßkraft zu messen. Das Verhältnis der beiden Meßergebnisse bestimmt den tatsächlichen Festigkeitszustand der Schraube.

Wie aus den Beispielen ersichtlich, kann man unter Anwendung der Erfindung mit den einfachsten technischen Mitteln, auf den verschiedensten Anwendungsgebieten das Anziehen der Schraubenverbindungen und deren Betriebszustand kontinuierlich kontrollieren bzw. überprüfen.

**Ansprüche**

1. Verfahren zum kontinuierlichen Kontrollieren und Überprüfen des Anziehens von Schraubenverbindungen, wobei die Schraubenverbindung mit beliebigen Mitteln angezogen wird, dadurch gekennzeichnet, daß die in der Schraube (1) entstehende Kraft auf eine flache Unterlage (2) übertragen wird und an der äußeren und/oder inneren, zu der Schraubenachse konzentrischen Mantelfläche der Unterlage (2) mindestens an einer Stelle die Deformation mit einem Dehnungsmeßwiderstand abgegriffen wird, wonach der abgegriffene Wert tensiometrisch in ein elektrisches Signal umgewandelt und angezeigt wird.

2. Verfahren nach Anspruch 1 dadurch gekennzeichnet, daß die Deformation an mehreren Stellen am Mantel der flachen Unterlage (2) gemessen wird, wonach man die Meßergebnisse mittelt und den Mittelwert anzeigt.

3. Kraftmesser zur Durchführung des Verfahrens nach Anspruch 1 oder 2, der mit der zu kontrollierenden bzw. zu prüfenden Schraube, der zu der Schraube (1) gehörenden Mutter (6, 7) und dem zu befestigenden Gegenstand (8, 9) bzw. einer Abstandshülse (13, 16) zusammenwirkt, dadurch gekennzeichnet, daß eine auf die Schraube (1) aufgesetzte flache Unterlage (2) vorgesehen ist, auf deren zu der Schraubenachse konzentrischen, inneren und/oder äußeren Mantelfläche wenigstens ein (tensiometrischer) Dehnungsmeßstreifen (3) angeordnet ist.

4. Kraftmesser nach Anspruch 3, dadurch gekennzeichnet, daß auf der flachen Unterlage (2) vertikale und horizontale spannungskonzentrierende Stellen hervorrufende, zu der Achse der Unterlage (2) parallele Bohrungen (5) oder Öffnungen ausgestaltet sind.

Fig.1

Fig.2

Fig.3

Fig.4

Fig.5

Europäisches
Patentamt

# EUROPÄISCHER RECHERCHENBERICHT

Nummer der Anmeldung

EP 88 10 9211

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 255 042 (STOVER) <br> * Seite 1, Zeilen 30-57; Seite 3, zeilen 9-17,64-68; Figuren 1-3 * <br> ----- | 1-3 | G 01 L 5/24 |
| | | | RECHERCHIERTE SACHGEBIETE (Int. Cl.4) |
| | | . | G 01 L |

Der vorliegende Recherchenbericht wurde für alle Patentansprüche erstellt

| Recherchenort | Abschlußdatum der Recherche | Prüfer |
|---|---|---|
| DEN HAAG | 08-02-1989 | ZAFIROPOULOS N. |

EPO FORM 1503 03.82 (P0403)